# EUROPÄISCHE PATENTSCHRIFT

(11) **EP 0 417 527 B1**
(45) Veröffentlichungstag und Bekanntmachung des Hinweises auf die Patenterteilung: **02.02.1994**
(21) Anmeldenummer: 90116208.1
(22) Anmeldetag: 24.08.1990
(51) Int. Cl.: A61K 6/033, C04B 35/00

(54) **Einbettmassenmodell und Verfahren zur Verhinderung des Ausblühens von Einbettmassenmodellen und Gussformen aus einer Gusseinbettmasse**
Investment model and process for the prevention of deposit formation on models or castings from the investment material
Modèle et procédé pour la prévention de formation de dépôts provenant du revêtement sur les modèles et objets coulés

(30) Priorität: 14.09.1989 DE 3930750
(43) Veröffentlichungstag der Anmeldung: 20.03.1991
(73) Patentinhaber: Krupp Medizintechnik GmbH, 45021 Essen (DE)
(72) Erfinder: Lindigkeit, Jürgen, Dr.-Ing., D-4690 Herne (DE); Friedrich, Ronald, D-4132 Kamp-Lintfort (DE)
(74) Vertreter: Vomberg, Friedhelm, Dipl.-Phys.

(56) Entgegenhaltungen:
- WORLD PATENTS INDEX LATEST Week 8224, Derwent Publications Ltd., London, GB; AN 8248794 & JP-A-57 072 748 (TOKUYAMA SODA K.K.)
- R.W.PHILLIPS 'SKINNER'S SCIENCE OF DENTAL MATERIALS' 1982 , W.B.SAUNDERS , PHILADELPHIA

## Beschreibung

### Verwendung eines Zusatzes in einer Gußeinbettmasse, Einbettmassenmodell und Verfahren zur Verhinderung des Ausblühens von Einbettmassenmodellen und Gußformen aus einer Gußeinbettmasse

Die Erfindung betrifft eine Verwendung eines in der Gesamtmasse enthaltenen Zusatzes einer Gußeinbettmasse zur Herstellung von Einbettmassenmodellen und Gußformen für Legierungsteile, insbesondere in der Dentaltechnik, mit dem Keramiksystem MgO-SiO₂-P₂O₅. Die Erfindung betrifft ferner ein Einbettmassenmodell und ein Verfahren zur Verhinderung des Ausblühens von Einbettmassenmodellen und Gußformen aus einer Gußeinbettmasse.

Gußeinbettmassen werden in der Zahntechnik zum Herstellen von Einbettmassenmodellen und zum Einbetten von Wachsmodellen verwendet. Hierbei werden in die entsprechenden Gußformen flüssige Metallegierungen gegossen. Nach dem Abkühlen und Erhärten der Legierung wird die Gußform entfernt und das Legierungsgußteil entnommen. Die Paßform des durch Gießen hergestellten Zahnersatzteiles hängt somit in entscheidendem Maße vom Einbettmassenmodell und von der Gießform ab, und hierbei insbesondere von ihren Oberflächengüten.

Die hier in Rede stehenden phosphatgebundenen Einbettmassen bestehen aus feuerfesten Bestandteilen, wie Quarz, Tridymit und Cristobalit sowie den Bindemitteln Phosphat, Magnesiumoxid und Wasser. Die Bindereaktionen einer solchen Einbettmasse lassen sich chemisch wie folgt darstellen:
1. Abbindung 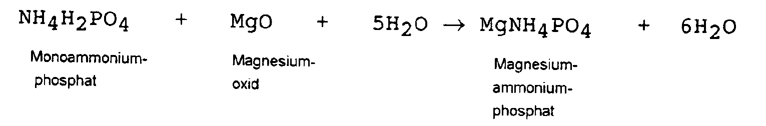
2. Feuerfestreaktion

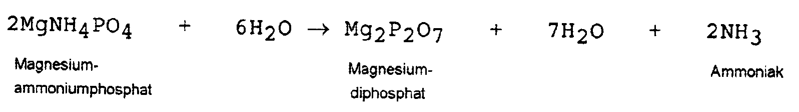

Die Abbindung und die Herstellung eines Einbettmassenmodells bzw. einer Gußform findet dadurch statt, daß das Monoammoniumphosphat mit dem überschüssigen Magnesit beim Anrühren der Gußeinbettmasse mit wasserhaltigen Flüssigkeiten zu Magnesiumammoniumphosphat-Wasserkomplexen reagiert. Das sich beim Anrühren bildende Magnesiumammoniumphosphat wird exotherm gebildet und ist schwer löslich. Aufgrund seiner kristallinen Morphologie verbindet es die keramischen Pulverbestandteile zu einer festen Form. Durch Erhitzen der Gußform wird diese entwässert und gesintert, wobei das Magnesiumammoniumphosphat stufenweise in die Verbindung Magnesiumpyrophosphat übergeht. Durch den in den Gußeinbettmassen stöchiometrisch überwiegenden Magnesit-Anteil sind in der gesin terten Gußform MgO-Mg₂P₂O₇-SiO₂-Partikel heterogen verteilt.

Die Abbindungsreaktion ist mit einer Expansion der Einbettmasse verbunden, welche sich steigern läßt, wenn man als Anmischflüssigkeit nicht Wasser, sondern ein wässeriges Kiesel sol benutzt, in dem SiO₂-Partikel kolloidal gelöst sind. Zur Stabilisierung des kolloidalen Kieselsols enthält dieses alkalische Zusätze in Form von Natriumhydroxid. Die in den Anmischlösungen vorhandenen Alkaligehalte, insbesondere das Natrium, führen jedoch zur Alkaliphosphat-, insbesondere Natriumphosphatbildung. Dieses Natriumphosphat an phosphatgebundenen Einbettmassen bei zahntechnischen Modellen und Gußmuffeln wird in der Praxis als "Ausblühungen" bezeichnet.

Die Stärke der Ausblühungen nimmt zu, wenn der Alkaligehalt bzw. der Carbonatgehalt im Kieselsol ansteigt. Dieser Vorgang wird z.B. dadurch unterstützt, daß Kohlendioxid aus der Luft in nicht verschlossenen Flaschen oder in Flaschen mit verbrauchsbedingter geringer Füllhöhe eindringt. Praktische Erfahrungen haben auch gezeigt, daß das Ausblühen besonders dann auftritt, wenn die Abbindung der Einbettmassen abgeschlossen ist, diese aber durch die abbindebedingte Entstehung von Feuchtigkeit noch nicht trocken sind. Hierbei treten hohe Feuchtigkeitsgehalte insbesondere dann auf, wenn zur Herstellung eines Einbettmassenmodells die Einbettmasse in eine Silikonform gegossen wird, da diese im Gegensatz zu anderen üblichen Formen nicht in der Lage ist, Feuchtigkeit aufzusaugen. Kristalline Natriumphosphatausscheidungen an der Oberfläche von Einbettmassenmodell und Gußform führen jedoch zu Fehlern im Zahnersatzgußteil und machen dieses unbrauchbar.

Zur Vermeidung von Ausblühungen ist bisher empfohlen worden, die Einbettmassenmodelle unmittelbar nach dem Entformen aus der Dublierform in einem Trockenschrank bei 250 °C zu trocknen. Hierdurch soll es möglich sein, die überschüssige Feuchtigkeit so schnell zu entfernen, daß der beschriebene Prozeß nicht ablaufen kann. Nachteiligerweise erfordert dies jedoch einen zusätzlichen Arbeitsgang und Energieaufwand.

Es ist somit Aufgabe der vorliegenden Erfindung, eine neue Verwendung und ein Einbettmassenmodell und ein Verfahren anzugeben, womit das Ausblühen von Einbettmassenmodellen und Gußformen bzw. Gußeinbettmassen verhindert werden kann.

Diese Aufgabe wird in den Ansprüchen 1, 8 und 9 gelöst; Weiterbildungen sind in den Unteransprüchen beschrieben. Die vorliegende Erfindung basiert darauf, daß die Ausblühungen auf chemischem Wege verhindert werden sollen, wozu 0,01 bis 10 Massen-% wasserlösliche, möglichst farblose und ungefährliche Säuren zugegeben werden.

Die WPIL, week 8224, Derwent Publications Ltd., London, GB, AN 8248794, JP-A-57027748 beschreiben zwar die Zugabe von Citronen- oder Apfelsäure in einer Menge unter 1 Massen-%, jedoch steht diese Zugabe nur im Zusammenhang mit einer optischen Anzeige des Härtungszustandes. Demgegenüber wird mit der vorliegenden Erfindung ein völlig anderer Zweck erfüllt, wozu es in dem genannten Dokument keinerlei Hinweise gibt.

Bei den erfindungsgemäß zur Anwendung kommenden Säuren handelt es sich um feste organische Carbonsäuren mit 2 bis 10 Kohlenstoffatomen, die in Wasser und/oder einem C₁-C₄-Alkohol (beispielsweise Methanol, Ethanol) löslich sind. Besonders bevorzugt sind aliphatische Mono- oder Polyhydroxydicarbonsäuren oder Mono-Polyhydroxytricarbonsäuren mit 3 bis 8 Kohlenstoffatomen. Erfindungsgemäß brauchbar sind jedoch auch Aminocarbonsäuren mit 2 bis 8 Kohlenstoffatomen.

Die besonders bevorzugten Carbonsäuren sind Citronensäure und Weinsäure.

Die Menge und Art der zugegebenen Säure bestimmen sich in erster Linie danach, welche Flüssigkeit zum Anrühren der Gußeinbettmasse verwendet wird. Der dabei erhaltene Brei sollte nach Möglichkeit einen pH-Wert im Bereich von 2 bis 8, vorzugsweise unter 6 und weiterhin vorzugsweise zwischen 5 und 5,5, aufweisen.

Die Gußeinbettmasse kann in Form einer Pulvermischung vorliegen, d.h., die organische Säure wird in Pulverform zu dem Keramikpulver gegeben. Die Gußeinbettmasse kann jedoch auch in der für die Herstellung der Einbettmassenmodelle geeigneten Konsistenz vorliegen, d.h. nach dem Anrühren mit einer wasserhaltigen Flüssigkeit in Form eines Breies, einer Paste oder dergleichen. Bei der wasserhaltigen Flüssigkeit kann es sich um Wasser, Wasser-Alkoholmischungen oder um ein wässriges Kieselsol oder Kieselsäurehydrolysat (alkoholische Kieselsole) handeln.

Bei dieser Variante kann die organische Säure entweder bereits in der zum Anrühren vorgesehenen Gußeinbettmasse in Pulverform oder in der zum Anrühren verwendeten wasserhaltigen Flüssigkeit enthalten sein. Sie kann jedoch auch nach dem Anrühren der Gußeinbettmasse zu dem Brei oder zu der Paste gegeben werden.

Das Ausblühen kann bei herkömmlich angemischten und getrockneten Massen auch dadurch verhindert werden, daß nur in den äußersten Oberflächenschichten der Gußform Säure enthalten ist. Dies läßt sich am einfachsten dadurch herstellen, daß das fertige Einbettmassenmodell mit einer wässerigen, lösungsmittelhaltigen oder alkoholischen Säurelösung besprüht oder bestrichen wird. Diese Vorgehensweise hat den Vorteil, daß nicht auf besondere pH-Wert-Führungen des Prozesses Rücksicht genommen werden muß.

Verwendet man nämlich, wie vielfach üblich, Kieselsole mit einem Siliciumdioxidgehalt von etwa 30 % und einem Alkaligehalt bis zu 1 %, so stellen sich automatisch pH-Werte zwischen 8 und 10, jedenfalls über 7,5 ein. Eine weitere pH-Wertsenkung tritt erfahrungsgemäß nur dann auf, wenn in den Einbettmassen Zirkonsiliciumoxid enthalten ist, welches die Alkalimetall adsorbiert. Insbesondere in diesem Falle kann ein im stark sauren Bereich liegender pH-Wert eingestellt werden, womit noch zufriedenstellende Lagerungszeiten erfüllt werden können.

Als bisher günstigste Säuren haben sich bei der vorliegenden Erfindung die Citronensäure und die Weinsäure erwiesen, die auch relativ preisgünstig sind.

Die nachfolgenden Beispiele erläutern die Erfindung.

### Beispiel 1

a) Unter Verwendung einer Menge von 150 g Einbettmassenpulvers, bestehendaus 80 % SiO₂, 10 % MgO und 10 % NH₄H₂PO₄ und 24 ml eines kolloidalen Kieselsols als Anrührflüssigkeit wurde ein Brei mit einem sich einstellenden pH-Wert von 5,5 angemischt und in einer Silikonform ein Einbettmassenmodell hergestellt. Nach der Entnahme des Modells aus der Silikonform und Lagerung auf dem Labortisch bildeten sich auf der Modelloberfläche sogenannte Ausblühungen.
b) Man wiederholt diesen Versuch, wobei jedoch dem Einbettmassenpulver 0,2 % kristalline Weinsäure zugegeben wurden. Aus diesem Pulver und kolloidalem Kieselsol wurde erneut ein Brei, bei dem sich ein pH-Wert von 5,3 einstellte, angemischt und in einer Silikonform ein Einbettmassenmodell hergestellt und nach dem Abbinden entnommen.

Auf diesem Modell bildeten sich auch nach mehrtägiger Lagerung keine Ausblühungen.

### Beispiel 2

Es wurden zwei Modelle nach dem unter Beispiel 1 a) beschriebenen Verfahren hergestellt. Nach der Entnahme aus der Silikonform wurde eines der Modelle mit einer 10 %igen Citronensäurelösung (in Alkohol gelöst) mittels eines Pumpzerstäbers eingesprüht und anschließend trockengeblasen. Das andere Modell bliebt unbehandelt. Bei dem unbehandelten Modell bildeten sich bei Lagerung in normaler Atmosphäre die bereits beschriebenen Ausblühungen, die bereits nach 1 1/2 Stunden mit bloßem Auge gut sichtbar waren. Bei dem einen behandelten Modell waren hingegen auch nach mehreren Tage keine Ausblühungen zu erkennen.

## Patentansprüche

1. Verwendung eines in der Gesamtmasse einer Gußeinbettmasse enthaltenen Zusatzes von 0,01 bis 10 Massen-% mindestens einer in Wasser und/oder einem C₁ - C₄-Alkohol löslichen, festen organischen Carbonsäure mit 2 bis 10 Kohlenstoffatomen zur Verhinderung des Ausblühens von Einbettmassenmodellen und Gußformen für Legierungsteile, insbesondere in der Dentaltechnik, auf Basis des Keramiksystems MgO-SiO₂-P₂O₅.

2. Verwendung nach Anspruch 1 von 0,01 bis 1 Massen-%, vorzugsweise 0,5 Massen-% Säure(n).

3. Verwendung nach Anspruch 1 oder 2, dadurch gekennzeich net, daß die organische Säure eine aliphatische Mono- oder Polyhydroxydicarbonsäure oder -tricarbonsäure mt 2 bis 8 Kohlenstoffatomen ist.

4. Verwendung nach einem der Ansprüche 1 oder 2, dadurch gekennzeichnet, daß die Säure(n) aus folgender Gruppe ausgewählt ist (sind): Adipinsäure, Apfelsäure (d, l), Ascorbinsäure, Aspariginsäure, Benzoesäure, Citronensäure, Fumarsäure, Gallussäure, Glutarsäure, Hippursäure, Itaconsäure, Korksäure, Phenylessigsäure, Pimelinsäure, Schleimsäure und Weinsäure.

5. Verwendung der Gußeinbettmasse in Form einer Pulvermischung.

6. Verwendung der Gußeinbettmassen in Form eines Breies, einer Paste oder dergleichen, wobei die Säure(n) in einer Menge enthalten ist, daß der pH-Wert der angerührten Gußeinbettmasse zwischen 2 und 8, vorzugsweise unter 6, liegt.

7. Verwendung nach Anspruch 6, dadurch gekennzeichnet, daß man zu ihrer Herstellung eine wasserhaltige Flüssigkeit aus einem wässrigen Kieselsol oder Kieselsäurehydrolysaten (alkoholische Kieselsole) einsetzt.

8. Einbettmassenmodell aus einer Gußeinbettmasse auf Basis des Keramiksystems MgO-SiO₂-P₂O₅, dadurch gekennzeichnet, daß es mindestens eine organische, wasser- oder alkohollösliche Carbonsäure in einer Menge von 0,01 bis 10 Massen-% umfaßt, wobei der Säuregehalt an oder zur Oberfläche hin größer ist als im Inneren des Einbettmassenmodells.

9. Verfahren zur Verhinderung des Ausblühens von Einbett massenmodellen aus einer Gußeinbettmasse auf der Basis des Keramiksystems MgO-SiO₂-P₂O₅, dadurch gekennzeichnet, daß man auf die Oberfläche des Einbettmassenmodells nach dem Entwässern (Trocknen) eine wässerige oder alkoholische oder andere leicht flüchtige Bestandteile enthaltende Säurelösung aufbringt.

10. Verfahren nach Anspruch 9, dadurch gekennzeichnet, daß das Einbettmassenmodell mit in leichtflüchtigem Alkohol gelöster Citronensäure besprüht wird.

## Claims

1. Use of an admixture of 0.01 to 10 mass % of at least one water-soluble or C₁-C₄-alcohol soluble solid organic carboxylic acid having 2 to 10 carbon-atoms contained in the total mass for the material for preventing of the efflorescence of investment models and casting moulds for alloy-parts, especially in the dental technique, based on the ceramic system MgO-SiO₂-P₂O₅.

2. Use of 0.1 to 1 mass %, preferably 0.5 mass % acid(s) according to claim 1.

3. Use according to claim 1 or 2, characterized in that the organic acid is an aliphatic mono- or polyhydroxidicarboxylic or -tricarboxylic acid having 2 to 8 carbon atoms.

4. Use according to one of the claims 1 or 2, characterized in that the acid(s) is chosen from the following group: Adipin acid, malic acid (d, l), ascorbic acid, aspariginic acid, benzoic acid, citric acid, fumaric acid, gallus acid, glutaric acid hippuric acid, itaconic acid, suberic acid, phenyl acetic acid, pimelic acid, mucic acid and tartaric acid.

5. Use of the investment mass in the form of a powder-mixture.

6. Use of the investment mass in the form of a pulp, a paste or suchlike whereby the acid(s) are contained in an amount such that the pH-Value of the stirred up investment is between 2 and 8, preferably below 6.

7. Use according to claim 6, characterized in that for its manufacture an aqueous liquid selected of an aqueous silicic sole or a silicic acid hydrolysate (alcoholic silicic sole) is taken.

8. Investment model from an investment mass based on the ceramic sytem MgO-SiO₂-P₂O₅ characterized in that it contains at least water-soluble or alcohol-soluble, carbonic acid in an amount of 0.01 to 10 mass %, whereby the acid content at or to the surface is greater than in the inner region of the investment model.

9. Method for preventing efflorescence of investment models from a cast investment mass based on the ceramic system MgO-SiO₂-P₂O₅, characterized in that after the dehydration (drying) onto the surface of the model an aqueous or alcoholic or other high-volatility components containing acid solution is applied.

10. Method according to claim 9, characterized in that the investment model is sprayed with a solution of citrid acid, dissolved in high-volatility alcohol.

## Revendications

1. Utilisation d'une addition, contenue dans la masse totale d'une masse d'incorporation, d'au moins 0,01 à 10 % en masse d'au moins un acide organique carboxylique solide, soluble dans l'eau et/ou dans un alcool C₁-C₄, et comportant 2 à 10 atomes de carbone, pour empêcher l'éfflorescence sur les modèles de masse d'incorporation et les moules de fonderie destinés à des pièces en alliage, en particulier dans la technique dentaire, sur la base du système céramique MgO-SiO₂-P₂O₅.

2. Utilisation, suivant la revendication 1, d'acide(s) en quantité de 0,01 à 1 % en masse, de préférence de 0,05 % en masse.

3. Utilisation suivant la revendication 1 ou la revendication 2, caractérisée en ce que l'acide organique est un acide monocarboxylique aliphatique ou un acide polyhydroxydicarboxylique ou un acide tricarboxylique, comportant 2 à 8 atomes de carbone.

4. Utilisation suivant l'une quelconque des revendications 1 ou 2, caractérisée en ce que l'acide est choisi, ou les acides sont choisis, dans les groupes suivants: acide adipique, acide malique (d, l), acide ascorbique, acide aspartique, acide benzoïque, acide citrique, acide fumarique, acide gallique, acide glutarique, acide hippurique, acide itaconique, acide subérique, acide phénylacétique, acide pimélique, acide mucique et acide tartrique.

5. Utilisation de la masse d'incorporation sous la forme d'un melange de poudres.

6. Utilisation de la masse d'incorporation sous la forme d'un brai, d'une pâte ou similaire, le ou les acides étant contenus en quantité telle que la valeur du pH de la masse d'incorporation introduite soit comprise entre 2 et 8, et de préférence inférieur à 6.

7. Utilisation suivant la revendication 6, caractérisée en ce que l'on met en oeuvre , pour sa fabrication, un liquide aqueux constitué d'un sol silicique colloïdal aqueux ou d'hydrolysats d'acide silicique (sols siliciques alcooliques).

8. Modèle en masse d'incorporation, constitué d'une masse d'incorporation, sur la base d'un système céramique MgO-SiO₂-P₂O₅, caractérisé en ce qu'il comprend au moins un acide organique carboxylique, soluble dans l'eau ou dans l'alcool, dans une quantité de 0,01 à 10 % en masse , la teneur en acide sur la surface externe, ou en allant vers la surface externe, étant plus grande qu'à l'intérieur du modèle.

9. Procédé pour empêcher l'efflorescence de modèles de masse d'incorporation, constitués d'une masse d'incorporationdans la fonte, sur la base du système céramique MgO-SiO₂-P₂O₅, caractérisé en ce qu'on dépose sur la surface externe du modèle de masse d'incorporation , après déshydratation (séchage), une solution acide contenant des composants aqueux, ou alcooliques, ou autres légèrement fluides.

10. Procédé suivant la revendication 9, caractérisé en ce que le modèle de masse d'incorporation est arrosé avec de l'acide citrique dissous dans de l'alcool volatil.
